# EUROPÄISCHE PATENTSCHRIFT

(11) **EP 1 995 544 B1**
(45) Veröffentlichungstag und Bekanntmachung des Hinweises auf die Patenterteilung: **18.07.2018**
(21) Anmeldenummer: 08008752.1
(22) Anmeldetag: 09.05.2008
(51) Int. Cl.: F28D 7/16, F28F 9/02, F02B 29/04

(54) **Wärmetauscher, insbesondere Ladeluftkühler oder Abgaskühler für eine Brennkraftmaschine eines Kraftfahrzeuges und dessen Herstellungsverfahren**
Heat exchanger, in particular charger air cooler or exhaust gas cooler for a combustion engine of a motor vehicle and manufacturing method therefor
Echangeur thermique, en particulier refroidisseur d'air de suralimentation ou refroidisseur de gaz d'échappement pour un moteur à combustion interne d'un véhicule automobile et son procédé de fabrication

(30) Priorität: 24.05.2007 DE 102007024630
(43) Veröffentlichungstag der Anmeldung: 26.11.2008
(73) Patentinhaber: MAHLE Behr GmbH & Co. KG, 70469 Stuttgart (DE)
(72) Erfinder: Schienemann, Mark, 71686 Remseck (DE); Moldovan, Florin, 70569 Stuttgart (DE)
(74) Vertreter: Grauel, Andreas

(56) Entgegenhaltungen:
- DE-A1- 4 436 027
- DE-A1-102006 043 526
- FR-A1- 2 499 234
- FR-A1- 2 584 488
- US-A1- 2006 118 285

## Beschreibung

Die Erfindung betrifft einen Wärmetauscher, insbesondere Ladeluftkühler oder Abgaskühler für eine Brennkraftmaschine eines Kraftfahrzeuges und dessen Herstellungsverfahren.

Bekannt sind bereits Wärmetauscher, die als sogenannte Ganzaluminium-Wärmetauscher ausgebildet sind. Weiter ist bekannt, dass solche Wärmetauscher bzw. Ganzaluminium-Wärmetauscher als Ladeluftkühler für eine Brennkraftmaschine eingesetzt werden können. Bekannte Ladeluftkühler weisen zwei beabstandete Kästen auf, die über eine Vielzahl von Rohren, wie Flachrohre, strömungsverbunden sind. Die zu kühlende Ladeluft strömt dann von dem einen der beiden Kästen durch die Rohre in den anderen der beiden Kästen. Zwischen den Rohren sind quer zu ihrer Längserstreckungsrichtung Zwischenräume vorgesehen, die von einem Kühlmittel durchströmt werden können. Der von diesen Rohren gebildete Rohrblock ist dabei von einem separaten, um den Rohrblock umfangsmäßig geschlossenen und eine Abdeckung bzw. Ummantelung bildenden Blech umgeben, so dass zwischen den beiden Kästen eine Kammer ausgebildet wird, durch welche die Rohre verlaufen. Diese Ummantelung ist mit einem Zulauf sowie einem Ablauf für Kühlmittel versehen.

Bekannt ist bei solchen Gestaltungen, dass als Ganzaluminium-Wärmetauscher gestaltete Ladeluftkühler jeweils einen Kasten sowie einen Boden auf einer Seite des Rohrblocks aufweisen. Der Kasten bildet dabei eine Art Haube aus, die auf ihrer offenen Seite durch den Boden verschlossen wird. Im Boden sind dabei mehrere Durchgangsöffnungen vorgesehen, in welche die Rohre eingesetzt sind. Der bzw. die Böden werden daher auch als Rohrboden bzw. Rohrböden bezeichnet. Das Einsetzen der Rohre in diese Böden erfolgt in der Regel vor dem Zusammenfügen der betreffenden Böden mit den ihnen jeweils zugeordneten Kästen. Bei derartigen Gestaltungen werden einerseits die Rohre mit den Böden und andererseits die Böden mit den Kästen über geeignete Verbindungsmittel verbunden. Bekannt ist beispielsweise, dass die Rohre mit den Böden verlötet werden und die Böden mit den Kästen verlötet werden.

Im Stand der Technik ist aus der DE 10 2006 043 526 A1 ein Wärmetauscher bekannt, der einen Rohrblock und an den jeweiligen Enden des Rohrblocks einen Boden und einen auf den jeweiligen Boden aufgesetzten Kasten aufweist, wobei die Böden und die Kästen miteinander verschweißt sind. Bekannt ist weiter, dass die Böden im oder über den Kasten verlaufen können. Hierzu können die Böden beispielsweise einen in Längsrichtung der Rohrlängsachsen vorspringenden umlaufenden Rand aufweisen, der das dem Boden zugewandte Kastenende von außen umgreift oder im Bereich dieses Kastenendes in den Kasten eingesteckt ist. Dabei wird dieser vorspringende Rand des Bodens mit dem Kasten verlötet.

Bekannt sind weiter Ausgestaltungen derartiger Kästen, bei denen kein separater Boden vorhanden ist und die lediglich einen Kasten aufweisen. Bei solchen Gestaltungen sind die Rohre in ihren dem jeweilige Kasten zugewandten Endbereichen aufgeweitet und in den aufgeweiteten Bereichen miteinander verlötet.

Der Erfindung liegt die Aufgabe zugrunde, einen - insbesondere als Ganzaluminium-Wärmetauscher gestalteten - Wärmetauscher, wie Ladeluftkühler oder Abgaskühler für eine Brennkraftmaschine eines Kraftfahrzeugs, zu schaffen, und insbesondere die Verbindung zwischen Boden und Kasten, sowie zwischen Boden und Abdeckung weiter zu verbessern. Des weiteren ist es die Aufgabe der Erfindung, ein Verfahren für die Herstellung eines erfindungsgemäßen Wärmetauschers zur Verfügung zu stellen.

Diese Aufgabe wird erfindungsgemäß durch den Wärmetauscher gemäß Anspruch 1 gelöst. Das entsprechende Verfahren für die Herstellung eines erfindungsgemäßen Wärmetauschers zeigt Anspruch 9. Bevorzugte Weiterbildungen sind Gegenstand der Unteransprüche.

Ein erfindungsgemäßer Wärmetauscher weist einen ersten Kasten, sowie einen von diesem beabstandet angeordneten zweiten Kasten auf, der mit dem zweiten Kasten über eine Vielzahl von Rohren strömungsverbunden ist Der Wärmetauscher weist ferner eine von einem Kühlmittel durchströmbare Kammer auf die zwischen den beiden Kästen angeordnet ist und durch welche mehrere oder alle dieser Rohre verlaufen. Jeder Kasten ist durch einen Boden abgeschlossen, der mit einer oder mehreren Durchgangsöffnungen zur Aufnahme der Rohre versehen ist. Wenigstens ein Boden weist eine von den Rohren nach außen weg weisende Einfassung auf, und ist mit einer ersten Abstufung und einer zweiten Abstufung versehen. Die Einfassung ist im Wesentlichen im Randbereich des Bodens angeordnet und die zweite Abstufung ist im Bereich der ersten Abstufung von der ersten Abstufung nach außen versetzt angeordnet.

Durch den Hitzeeintrag beim Schweißen des Kastens kann es zu Undichtigkeiten in nahe gelegenen Lötverbindungen kommen. Wird nun der Boden auf der dem Kasten zugewandten Seite mit zwei Abstufungen und auf der dem Kasten gegenüberliegenden Seite mit einer erfindungsgemäßen Boden-Aussparung versehen, so wird der Abstand zwischen der Schweißstelle am Kasten und der nächst liegenden Lötstelle, insbesondere die Lötstelle im Bereich der Abdeckung, vergrößert. Dies führt dazu, dass die Temperatur an der nächstliegenden Lötstelle die Schmelztemperatur des Lots dann nicht mehr erreicht.

Die Rohre sind mit ihrem jeweiligen einen Ende in die Durchgangsöffnungen des ersten Bodens mit ihrem jeweiligen anderen Ende in die des zweiten Bodens eingesteckt. Es ist vorgesehen, dass einer der Kästen oder beide Kästen jeweils so gestaltet sind, dass der Boden dieses Kastens bzw. der jeweilige Boden des jeweiligen Kastens eine Boden-Nut besitzt, welche die Abdeckung beim Kassettieren fixiert und die zweite Abstufung bzw. im Fall der zweiten Ausführungsform des Bodens eine Nut aufweist, die den Kasten fixiert und den für das Schweißen benötigten Mindestabstand von 7-10 mm von der Schweißnaht bis zur nächsten Lötverbindung (Abdeckung - Boden bzw. Rohr - Boden) aufweist.

Die Abdeckung kann beispielsweise so gestaltet sein, dass sie die Kammer zu einer Seite begrenzt; sie kann aber auch so sein, dass sie eine im Wesentlichen umfangsmäßig im Wesentlichen geschlossene Hülle für die Begrenzung der Kammer bildet, oder auf andere Weise gestaltet sein. Es kann auch vorgesehen sein, dass sie mehrteilig gestaltet ist, bzw. dass mehrere Abdeckungen, wie Abdeckbleche, vorgesehen sind, die sich in vorerwähnter Weise - insbesondere mit einem Randbereich - in eine (jeweilige) Nut bzw. jeweilige Nuten erstrecken, die im Boden des ersten Kastens und / oder im Boden des zweiten Kastens vorgesehen ist. Beispielsweise kann auf zwei gegenüberliegenden Seiten des von den Rohren gebildeten Rohrblocks jeweils eine derartige Abdeckung bzw. ein derartiges Abdeckblech vorgesehen sein.

Gemäß einer besonders zu bevorzugenden Weiterbildung wird die zwischen den Kästen vorgesehene Kammer auf den in Längserstreckungsrichtung der Rohre gegenüberliegenden Seiten von den Kästen begrenzt. Dies ist in einer vorteilhaften Ausgestaltung so, dass die Kammer auf der einen der beiden in Längserstreckungsrichtung der Rohre gegenüberliegenden Seiten von dem Boden des ersten Kastens begrenzt wird, und auf der anderen dieser beiden in Längserstreckungsrichtung der Rohre gegenüberliegenden Seiten von dem Boden des zweiten Kastens begrenzt wird.

Ein erfindungsgemäßer Wärmetauscher ist so gestaltet, dass das Rohrbündel (Rohre, Innenrippen, Turbulenzeinlagen, Abdeckungen, Böden) verlötet wird und anschließend auf den verlöteten Block die gegossenen Kasten, vorzugsweise aus Aluminiumguss, fluiddicht verschweißt werden.

Der Boden des ersten Kastens und / oder der Boden des zweiten Kastens weist auf der dem Kasten zugewandten Seite wenigstens eine umlaufende Abstufung und eine zweite umlaufende Abstufung bzw. eine umlaufende Nut zur Fixierung des Kastens auf.

Wie auch die vorstehenden Ausführungen zeigen, können die Ausgestaltungen des Kastens bzw. des Bodens und das Zusammenwirken von Kasten und Boden bzw. das Zusammenwirken von Boden und Abdeckung sich auf einen der beiden Kasten beziehen oder auf beide Kästen.

Gemäß der Erfindung ist vorgesehen, dass eine erste Profilierungserhöhung quer, insbesondere senkrecht, zur Längserstreckungsrichtung der Rohre von dem von den Rohren, insbesondere Flachrohren, gebildeten Rohrblock beabstandet ist, so dass quer, insbesondere senkrecht, zur Längserstreckungsrichtung der Rohre wenigstens ein erster Zwischenraum zwischen diesem Rohrblock und dieser ersten Profilierungserhöhung gebildet wird, wobei für die Begrenzung der Kammer zumindest eine Abdeckung, insbesondere Abdeckblech, vorgesehen ist, und wobei sich ein - insbesondere endseitiger - Wandabschnitt bzw. Rand dieser Abdeckung in diesen ersten Zwischenraum erstreckt. Dabei kann vorgesehen sein, dass dieser sich in den zwischen dem Rohrblock und der ersten Profilierungserhöhung gebildeten ersten Zwischenraum erstreckende Wandabschnitt der Abdeckung im Wesentlichen an diesem Rohrblock und / oder an dieser ersten Profilierungserhöhung anliegt und / oder mit Rohren des Rohrblocks und / oder mit der ersten Profilierungserhöhung, beispielsweise mittels Lotplattierung, verlötet ist.

Besonders vorteilhaft ist eine bevorzugte Ausgestaltung, gemäß der sich - wie zuvor erwähnt - ein Wandabschnitt der Abdeckung in eine Boden-Nut dieses Bodens der genannten Art erstreckt. Wenigstens ein Boden weist auf der dem Kasten zugewandten Seite eine dritte Abstufung mit einer Oberkante auf, wobei die Oberkante in einer Ebene mit der ersten Abstufung liegt. Die zweite Abstufung bildet zwischen der ersten Abstufung und der dritten Abstufung eine Nut. Ist der Kühlmittelstutzen zu Nahe am Boden angeordnet, insbesondere falls der Abstand zwischen der Schweißnaht für den Kasten und dem Kühlmittelstutzen < 10 mm beträgt, und somit den Schweißprozess behindert, so weist die dem Kasten zugewandten Seite des Bodens eine dritte Abstufung auf. Der Kasten erstreckt sich dann in die oben genannte Nut. Diese Nut ist vorteilhafterweise eine umlaufende oder eine im Wesentlichen umlaufende Nut.

Des Weiteren wird in einer Ausführungsform im äußeren Randbereich des Bodens ein Bodenüberstand ausgebildet. Der Bodenüberstand wenigstens eines Bodens beträgt bevorzugt zwischen 3 mm und 10 mm, vorzugsweise 5 mm. Für das Fügen von einem diesen Boden und wenigstens einem Kasten wird bevorzugt ein stoffschlüssiges Fügeverfahren, insbesondere Schweißen, eingesetzt, wodurch der Boden im Bereich des Bodenüberstands in seiner Ausdehnung nach außen abnimmt, und den Wärmetauscher insbesondere fluiddicht verschweißt. Das Verschweißen kann beispielsweise mittels Laserschweißen, WIG- und MIG-Schweißen oder auf andere Weise erfolgt sein. Der Bodenüberstand wird durch den Schweißprozess abgetragen, sodass nach dem Schweißen nur noch ein geringer bzw. gar kein Bodenüberstand vorhanden ist.

In einem erfindungsgemäßen Wärmetauscher erstreckt sich wenigstens ein Kasten, bzw. ein Wandabschnitt desselben Kastens in die zweite Abstufung dieses Bodens.

In einem erfindungsgemäßen Wärmetauscher ist auf einer dem Kasten abgewandten Seite wenigstens eines Bodens eine Boden-Aussparung ausgebildet, welche sich vorzugsweise von der ersten Profilierungserhöhung des Bodens zur Innenseite des Bodens hin erstreckt. Durch die Boden-Aussparung wird vorzugsweise ein Spalt zwischen der Abdeckung und der ersten Profilierungserhöhung gebildet.

Es ist vorgesehen, dass bei einem erfindungsgemäßen Wärmetauscher wenigstens ein Kasten vorzugsweise mit einem gießtechnischen Verfahren, insbesondere mit dem Druckguss-Verfahren, hergestellt wird. Der gegossene Kasten hat standardmäßig eine Wanddicke von ≥ 3 mm. Gegossene Kästen weisen des Weiteren den Vorteil auf, dass evtl. erforderliche Halter direkt mitgegossen werden können (Kasten und Halter aus einem Bauteil).

Bevorzugt ist ferner, dass die wenigstens eine Abdeckung, insbesondere Abdeckblech, mit dem Boden verlötet ist. In vorteilhafter Ausgestaltung ist vorgesehen, dass das Lot, mittels welchem der Boden und die Abdeckung verlötet sind, im Bereich des zwischen der Profilierungserhöhung und der Boden-Aussparung gebildeten Zwischenraums gegeben ist.

Die Abdeckung ist in vorteilhafter Weise im Bereich des Zwischenraums, der zwischen der ersten Profilierungserhöhung des Bodens und der Abdeckung ausgebildet wird, mit dieser ersten Profilierungserhöhung und / oder mit den dortigen Rohrabschnitten von Rohren des Rohrblocks verlötet oder - in alternativer Gestaltung - im Bereich der Boden-Nut, so dass Lot in dieser Boden-Nut gegeben ist. Das Verlöten erfolgt in vorteilhafter Weiterbildung mittels Lotplattierung.

Gemäß einer vorteilhaften Weiterbildung ist der Boden im Wesentlichen flach bzw. eben ausgebildet ist.

Die wenigstens eine Abdeckung kann aus Blech geformt sein. Der Boden bzw. die Böden sind vorteilhafter Weise einstückig ausgebildet bzw. aus einem einstückigen Teil gefertigt.

Es ist insbesondere vorgesehen, dass die bzw. sämtliche Rohre in der quer zu der Längserstreckungsrichtung gesehenen Richtung beabstandet sind, so dass Rohrzwischenräume für eine Durchströmung mit einem von einem durch die Rohre strömenden Medium (insbesondere Abgas oder Ladeluft) verschiedenen Medium (insbesondere Kühlmittel) ausgebildet werden. Solche Rohrzwischenräume können insbesondere jeweils zwischen benachbarten Rohren gegeben sein. Die Rohre können in ihrem Inneren einen oder mehrere Kanäle ausbilden. Anzumerken ist, dass als "Rohrblock" im Sinne dieser Anmeldung die Einheit der Rohre - insbesondere in ihrer montierten Anordnung - bezeichnet wird. Der Begriff "Rohrblock" schließt also die angesprochenen Rohrzwischenräume nicht aus, und soll insbesondere nicht anzeigen, dass die Rohre in Kontakt miteinander stehen müssen.

Beispielsweise kann auch vorgesehen sein, dass in die Rohrzwischenräume Turbulenzeinlagen eingesetzt sind. Diese können beispielsweise die jeweils benachbarten Rohre kontaktieren und / oder mit diesen verlötet sein, und zwar insbesondere mittels Lotplattieren.

Die Kammer kann eine Einlassöffnung für ein Kühlmittel, wie Wasser oder dergleichen, sowie eine Auslassöffnung für das Kühlmittel aufweisen.

Es kann vorgesehen sein, dass in den Rohren Rippen vorgesehen sind, und zwar insbesondere zur Verbesserung der Wärmeleitung.

Besonders bevorzugt ist vorgesehen, dass der Wärmetauscher ein Ladeluftkühler oder ein Abgaskühler für eine Brennkraftmaschine eines Kraftfahrzeugs ist. Dabei kann vorgesehen sein, dass die Ladeluft bzw. das Abgas mittels dieses Ladeluftkühlers bzw. Abgaskühlers abgekühlt werden kann. Es kann vorgesehen sein, dass die Ladeluft bzw. das Abgas in den einen der beiden Kästen des Wärmetauschers eintritt, und anschließend durch die Rohre in den anderen der beiden Kästen strömt. Durch die Rohrzwischenräume bzw. die angesprochene Kammer kann dabei ein Kühlmittel strömen.

In vorteilhafter Ausgestaltung ist der erfindungsgemäße Wärmetauscher ein sogenannter Ganzaluminium-Wärmetauscher bzw. besteht im Wesentlichen vollständig aus Aluminium.

Die Rohre, über welche der erste Kasten mit dem zweiten Kasten strömungsverbunden ist, sind vorzugsweise - insbesondere alle - Flachrohre. Bevorzugt ist ferner, dass die bzw. sämtliche Rohre, über welche der erste Kasten mit dem zweiten Kasten strömungsverbunden ist, parallel zueinander verlaufen. Die Rohre, über welche der erste Kasten mit dem zweiten Kasten strömungsverbunden ist, sind insbesondere zwischen dem ersten Kasten und dem zweiten Kasten angeordnet.

In einer weiteren vorteilhaften Ausführung weist der Wärmetauscher mindestens eine Aussparung, insbesondere mehrere Aussparungen, auf. Durch die Aussparung kann insbesondere während des Fügeprozesses, insbesondere während des Lötprozesses, besonders vorteilhaft eine Kraft auf die Rohre aufgebracht werden.

Zur Herstellung eines erfindungsgemäßen Wärmetauschers werden zuerst die Enden einer Vielzahl von Rohren durch die Durchgangsöffnungen des ersten Bodens geführt. Danach wird die Abdeckung oder, falls die Abdeckung mehrteilig ausgeführt ist, die Teile der Abdeckung um die Rohre angeordnet, wobei diese sich in die Boden-Nut des ersten Bodens erstrecken. Anschließend wird der zweite Boden auf der dem ersten Boden gegenüber liegenden Seite aufgesetzt, so dass die Rohre durch die Durchgangsöffnungen des zweiten Bodens geführt sind. Dann werden die Endbereiche der Rohre entlang ihres Umfangs mit den Böden durch Löten verbunden. Anschließend werden die Abdeckung oder die Teile der Abdeckung mit den Böden im Bereich der jeweiligen Boden-Aussparung oder im Bereich der Boden-Nut durch Löten verbunden. Als nächstes werden die Kästen auf jeweils einen Boden aufgesetzt und durch die jeweilige zweite Abstufung des jeweiligen Bodens fixiert. Danach werden die Kästen mit dem jeweiligen Boden durch Schweißen verbunden.

Nach dem erfindungsgemäßen Herstellungsverfahren kann ein Wärmetauscher, wie er vorstehend beschrieben wurde, kostengünstig und/oder in einer kurzen Herstellungszeit erzeugt werden. Durch die gegenüber dem Stand der Technik nach außen hin größere Beabstandung von Schweiß- und Lötstelle wird die thermische Belastung für die Lötstelle deutlich verringert. Dies reduziert vorteilhaft die Gefahr einer Undichtigkeit der Lötverbindungen und erhöht damit die Fertigungsqualität.

Im Folgenden sollen nun beispielhafte Ausführungsformen der Erfindung anhand der Figuren näher erläutert werden. Es zeigt:
- Fig. 1: eine perspektivische Ansicht eines Wärmetauschers nach einer Ausführungsform der vorliegenden Erfindung,
- Fig. 2: eine perspektivische Ansicht eines Rohrblocks mit jeweils einem Boden an dessen Ende,
- Fig. 3: eine perspektivische Explosionsansicht für ausgewählte Bauteile eines Wärmetauschers nach einer Ausführungsform der vorliegenden Erfindung,
- Fig. 4: eine perspektivische Ansicht eines Bodens,
- Fig. 5: eine perspektivische Ansicht einer Ausführungsform des Bodens gemäß der vorliegenden Erfindung,
- Fig. 6: eine Schnittdarstellung eines Bodens,

- Fig. 7: eine Schnittdarstellung der Ausführungsform des Bodens gemäß der vorliegenden Erfindung,
- Fig. 8: eine Schnittdarstellung für den Bereich "A" gemäß Fig. 1 des Wärmetauschers mit einem Boden.

- Fig. 9: eine Schnittdarstellung für den Bereich "A" gemäß Fig. 1 des Wärmetauschers nach einer Ausführungsform der vorliegenden Erfindung mit einer Ausführungsform des Bodens.

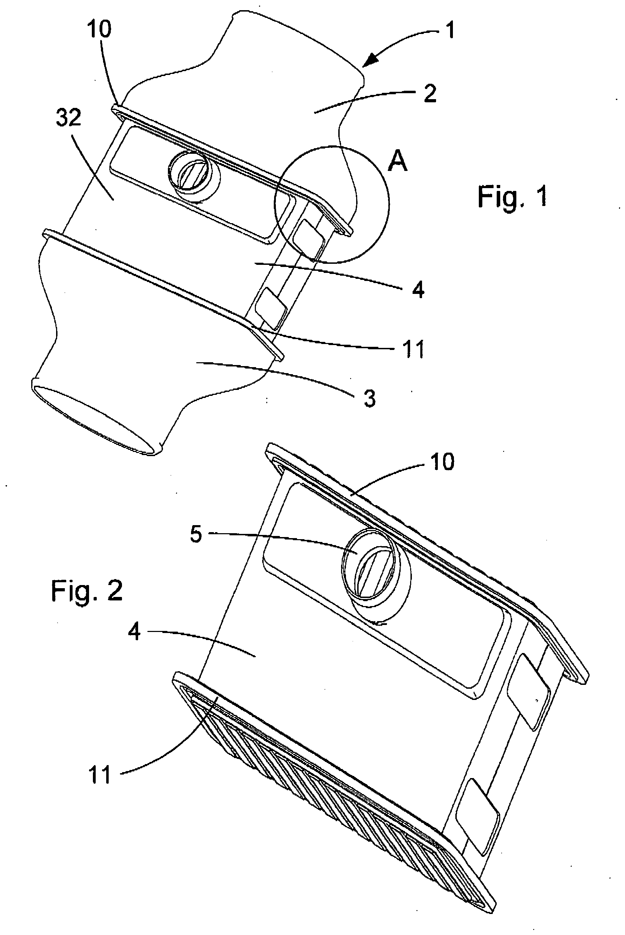

Fig. 1 zeigt eine Ausführungsform eines erfindungsgemäßen Wärmetauschers 1. Dieser umfasst im Wesentlichen einen ersten Kasten 2, einen ersten Boden 10, einen Rohrblock 4, einen zweiten Boden 11 und einen zweiten Kasten 3. Der Rohrblock 4 ist von einer Abdeckung 32 umgeben. Der Wärmetauscher weist eine Längsrichtung auf, in der dieser von einem Ladeluftstrom oder eine Abgasstrom durchströmt wird.

Fig. 2 zeigt eine Ausführungsform des Wärmetauschers, wie er nach der Verbindung des Rohrblocks 4 mit den beiden Böden 10, 11 entsteht. Auf einer Seite des Rohrblocks 4 ist ein Kühlmittelstutzen 5 angeordnet, wodurch dem Rohrblock 4 Kühlmittel zu- oder abgeführt werden kann.

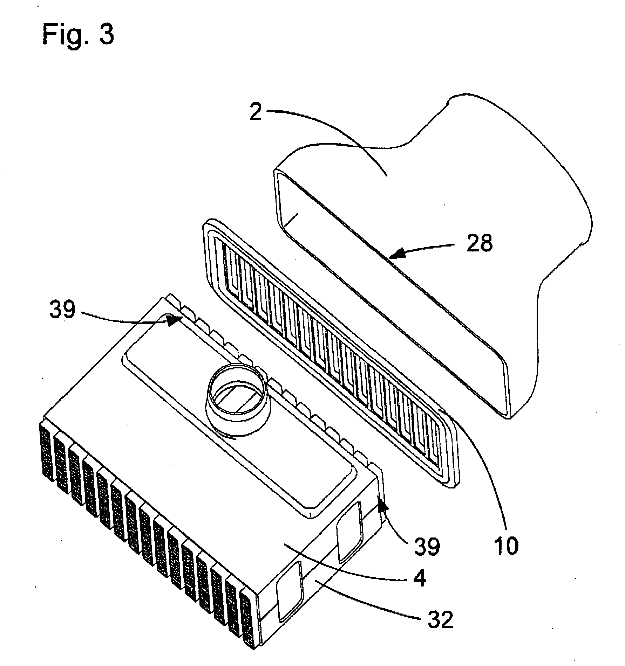

Fig. 3 zeigt eine perspektivische Ansicht für einen erfindungsgemäßen Wärmetauscher, wobei nur ausgewählte Bauteile des Wärmetauschers dargestellt sind. Es sind der Rohrblock 4 und die Abdeckung 32, der erste Boden 10 und der erste Kasten 2 dargestellt. Der erste Boden 10 ist nach dem Zusammenbau des Wärmetauschers sowohl mit der Abdeckung 32 als auch mit dem ersten Kasten 2 verbunden. Entsprechendes gilt für die Verbindung des zweiten Kastens 3 mit dem zweiten Boden 11, die hier nicht dargestellt sind. Die Kästen 2, 3 weisen eine im Wesentlichen haubenförmige Gestalt und jeweils auf ihren gegenüber liegenden Seiten eine Öffnung auf. Die Öffnungsquerschnitte sind derart gestaltet, dass auf der zum Boden hin gerichteten Seite des Kastens 2, 3 eine Aufnahme in die zweite Abstufung 21 des Bodens 10, 11 erfolgt und auf der zu dieser gegenüber liegenden Seite weisen die Kästen 2, 3 einen im Wesentlichen kreisförmigen Querschnitt auf. Die Kästen 2, 3 sind jeweils einstückige Bauteile.

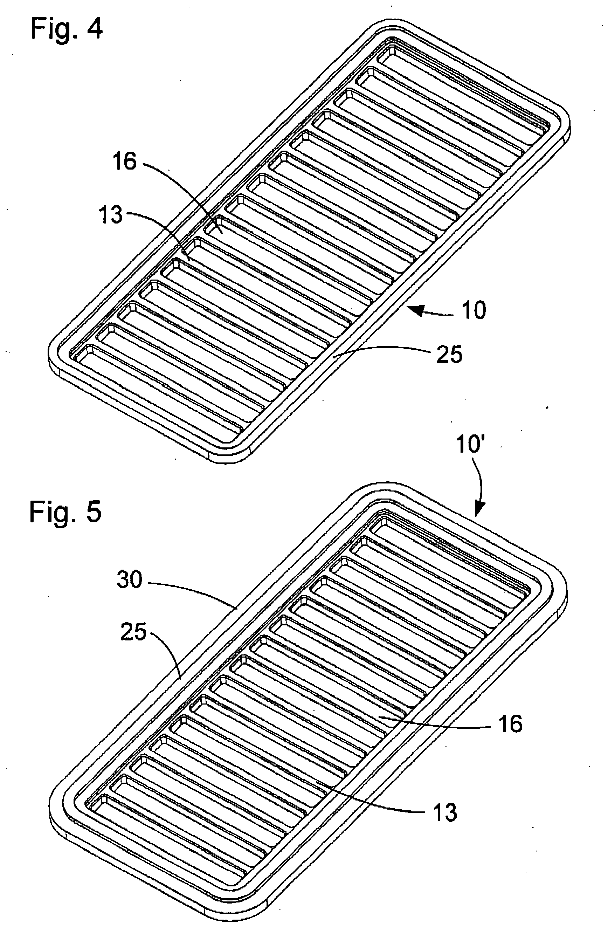

Fig. 4 zeigt die Rückansicht eines Bodens 10. Der Boden 10 weist eine im Wesentlichen rechteckige Gestalt auf, wobei die Eckbereiche jeweils abgerundet sind. Im Inneren des Bodens 10 sind quer zur Längsrichtung des Bodens 10 jeweils abwechselnd Durchgangsöffnungen 16 und stegartige Rohrbeabstander 13 angeordnet, wobei die stegartigen Rohrbeabstander 13 regelmäßig beabstandet sind. Die Durchgangsöffnungen 16 nehmen die Vielzahl von Rohren des Rohrblocks (nicht dargestellt) auf. Die Durchgangsöffnungen 16 weisen eine im Wesentlichen rechteckige Gestalt auf, wobei die Ecken abgerundet sein können. Auf einer Seite des Bodens 10 ist im Randbereich des Bodens 10 die Profilierungserhöhung 25 ausgebildet, welche als eine umlaufende Nut ausgebildet ist.

In Fig. 5 ist eine Ausführungsform des Bodens 10' gemäß der vorliegenden Erfindung dargestellt. Gleiche Bezugszeichen verweisen auf gleiche Bauteile und Merkmale. Die Ausführungsform des Bodens 10' weist gegenüber dem ersten Boden 10 einen zusätzlichen Bodenüberstand 30 auf, welcher insbesondere bei einem geringem Abstand zwischen dem Kühlmittelstutzen 5 und der zweiten Abstufung 21 in Längsrichtung des Wärmetauschers ein Verschweißen des Bodens 10' mit dem zugehörigen Kasten 2, 3 ermöglicht und zusätzlich den Verzug von Boden 10' und Kasten 2, 3 beim Schweißen wesentlich verringert.

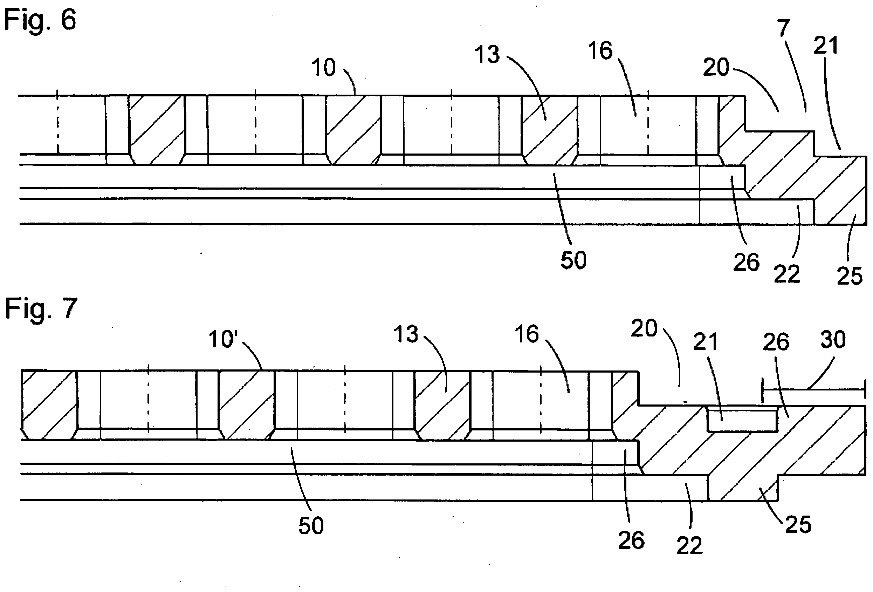

In Fig. 6 ist ein Schnitt durch den Boden 10 für den Randbereich des Bodens 10 dargestellt. Im Inneren des Bodens 10 sind eine Vielzahl von Durchgangsöffnungen 16, welche sich mit stegartigen Rohrbeabstandem 13 abwechseln, angeordnet. Im Randbereich des Bodens 10 ist eine Einfassung 7 ausgebildet, welche eine erste Abstufung 20 und eine zweite Abstufung 21 umfasst, wobei die zweite Abstufung 21 im Bereich der ersten Abstufung 20 nach außen versetzt angeordnet ist. Die beiden Abstufungen 20, 21 bilden jeweils auf der dem Kasten zugewandten Seite eine Fläche aus, welche im Wesentlichen eben ist. Auf der dem Kasten abgewandten Seite des Bodens 10 ist eine Profilierungserhöhung 25 ausgebildet, welche sich vom Rand des Bodens 10 zum Inneren des Bodens 10 bis im Wesentlichen zum Bereich der zweiten Abstufung 21 hin erstreckt. Von der Innenseite der Profilierungserhöhung 25 ausgehend ist eine Boden-Aussparung 22 ausgebildet, welche sich ins Innere des Bodens 10 erstreckt. Im Bereich der Boden-Aussparung 22 erstreckt sich auf der dem Kasten abgewandten Seite des Bodens 10 zum Inneren des Bodens 10 hin eine zweite Aussparung 50, die gegenüber der Boden-Aussparung 22 nach außen versetzt ist und in ihrem Randbereich die Boden-Nut 26 zur Aufnahme der Abdeckung 32 ausbildet.

Fig. 7 zeigt einen Schnitt durch die Ausführungsform des Bodens 10' für den Randbereich des Bodens 10'. Im Folgenden wird nur der Unterschied zum oben beschriebenen Boden erläutert. Im Randbereich des Bodens 10' ist auf der dem Kasten zugewandten Seite des Bodens 10' eine dritte Abstufung 26 ausgebildet, welche gegenüber der zweiten Abstufung 21 nach außen versetzt ist, wodurch zwischen der ersten Abstufung 20 und der dritten Abstufung 26 eine Nut ausgebildet wird, in die sich der Kasten erstreckt. Die Oberkante der ersten Abstufung 20 und die Oberkante der dritten Abstufung 26 sind im Wesentlichen auf einer Ebene angeordnet. Die dritte Abstufung 26 bildet nach außen hin einen Bodenüberstand 30 aus.

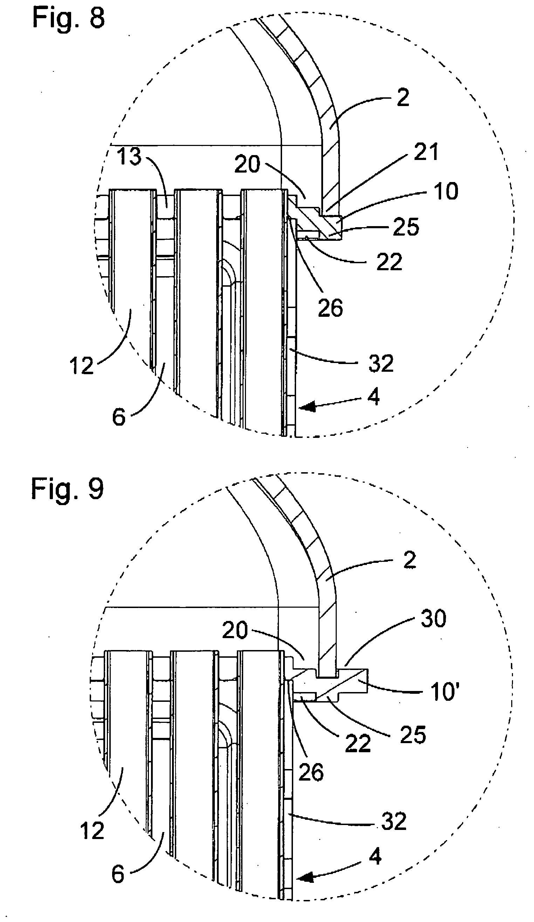

Fig. 8 zeigt eine vergrößerte Schnittansicht für den Bereich "A" gemäß Fig. 1 mit einem Boden 10. Der Boden 10 verbindet den ersten Kasten 2 und den Rohrblock 4. Der erste Kasten 2 erstreckt sich in die zweite Abstufung 21. Zwischen der Innenseite des ersten Kastens 2 und der ersten Abstufung 20 wird dabei ein Spalt ausgebildet. Auf der dem ersten Kasten 2 abgewandten Seite des ersten Bodens 10 ist eine Profilierungserhöhung 25 ausgebildet, welche eine umlaufende Nut ist. Zwischen der Abdeckung 32 und der Profilierungserhöhung 25 wird ein Spalt im Bereich der Boden-Aussparung 22 ausgebildet. Die Vielzahl von Rohren 10 in der Kammer 6 wird von den Durchgangsöffnungen im ersten Boden 10 und im zweiten Boden 11 (nicht dargestellt) aufgenommen. Die Rohre 10 werden in Längsrichtung des Bodens 10 durch stegartige Rohrbeabstander 13 voneinander getrennt. Der Rohrblock 4 wird durch die Abdeckung 32 gegenüber der Umgebung abgegrenzt. Die Abdeckung 32 erstreckt sich im ersten Boden 10 in die Boden-Nut 26, wodurch diese die Abdeckung 32 während der Montage des Rohrblocks 4 im ersten Boden 10 fixiert.

Fig. 9 zeigt einen erfindungsgemäßen Wärmetauscher, welcher sich lediglich durch die Ausführungsform des Bodens 10' von dem Wärmetauscher von Fig. 8 unterscheidet. Im Folgenden wird deshalb nur auf den Unterschied gegenüber Fig. 8 eingegangen. Der zweite Boden 10' weist im Randbereich einen Bodenüberstand 30 auf, welcher ca. 5 mm beträgt. Zwischen der ersten Abstufung und der dritten Abstufung wird im Bereich der zweiten Abstufung 21 eine Nut ausgebildet, in welche sich der erste Kasten 2 erstreckt. Diese Nut ist im Wesentlichen eine umlaufende Nut. Die Oberkante der ersten Abstufung und die Oberkante der dritten Abstufung liegen im Wesentlichen auf einer Ebene.

## Patentansprüche

1. Wärmetauscher, insbesondere Ladeluftkühler oder Abgaskühler für eine Brennkraftmaschine eines Kraftfahrzeuges, mit einem ersten Kasten (2), einem ersten Boden (10'), einem beabstandet zu diesem ersten Kasten (2) angeordneten zweiten Kasten (3), einem zweiten Boden (11) und einer Vielzahl von Rohren (12), mittels welchen der erste Kasten (2) und der zweite Kasten (3) strömungsverbunden sind, und mit einer von einem Kühlmittel durchströmbaren Kammer (6), die zwischen den beiden Kästen (2, 3) angeordnet ist und durch welche mehrere oder alle dieser Rohre (12) verlaufen, über welche die beiden Kästen (2, 3) strömungsverbunden sind, und die Boden (10', 11) mit einer oder mehreren Durchgangsöffnungen (16) zur Aufnahme der Rohre (12) versehen sind, wobei wenigstens ein Boden (10') eine von den Rohren (12) nach außen weg weisende Einfassung (7) aufweist, mit einer ersten Abstufung (20) und einer zweiten Abstufung (21) versehen ist, wobei die Einfassung (7) im Wesentlichen im Randbereich des Bodens (10') angeordnet ist und die zweite Abstufung (21) im Bereich der ersten Abstufung (20) von der ersten Abstufung (20) nach außen versetzt angeordnet ist, wobei dieser wenigstens eine Boden (10') eine dritte Abstufung mit einer Oberkante aufweist, wobei die Oberkante in einer Ebene mit der ersten Abstufung (20) liegt, wobei sich wenigstens ein Kasten (2, 3), bzw. ein Wandabschnitt (28) desselben Kastens (2, 3) in die zweite Abstufung (21) dieses Bodens (10') erstreckt, der Boden (10') auf seiner dem Kasten (2, 3) abgewandten Seite wenigstens eine erste Profilierungserhöhung (25), insbesondere eine im äußeren Randbereich des Bodens (10') umlaufende erste Profilierungserhöhung (25), aufweist und auf einer dem Kasten (2, 3) abgewandten Seite wenigstens eines Bodens (10') eine Boden-Aussparung (22) ausgebildet ist, welche sich von der ersten Profilierungserhöhung (25) des Bodens (10') zum Inneren des Bodens (10') hin erstreckt.

2. Wärmetauscher gemäß Anspruch 1, **dadurch gekennzeichnet, dass** dieser wenigstens eine Boden (10') durch die zweite Abstufung (21) zwischen der ersten Abstufung (20) und der dritten Abstufung eine Nut bildet.

3. Wärmetauscher gemäß Anspruch 2, **dadurch gekennzeichnet, dass** die zweite Abstufung (21) eine umlaufende oder eine im Wesentlichen umlaufende Nut ist.

4. Wärmetauscher gemäß Anspruch 1, 2 oder 3, **dadurch gekennzeichnet, dass** für die Begrenzung der Kammer (6) zumindest eine Abdeckung (32), insbesondere Abdeckblech, vorgesehen ist, und dass der Boden (10') auf der dem Kasten abgewandten Seite wenigstens eine Boden-Nut (26) aufweist, in welche sich ein Wandabschnitt (39) der Abdeckung (32) erstreckt.

5. Wärmetauscher gemäß Anspruch 4, **dadurch gekennzeichnet, dass** durch die Boden-Aussparung (22) ein Spalt zwischen der Abdeckung (32) und der ersten Profilierungserhöhung (25) gebildet wird.

6. Wärmetauscher gemäß einem der vorherigen Ansprüche, **dadurch gekennzeichnet, dass** wenigstens ein Boden (10') einen Bodenüberstand (30) aufweist, wobei dieser durch ein stoffschlüssiges Fügeverfahren, insbesondere Schweißen, für das Fügen von einem Boden (10') und wenigstens einem Kasten (2, 3) in seiner Ausdehnung nach außen abnimmt.

7. Wärmetauscher gemäß einem der vorherigen Ansprüche, **dadurch gekennzeichnet, dass** der Bodenüberstand (30) eines Bodens (10') zwischen 3 mm und 10 mm, vorzugsweise 5 mm, beträgt.

8. Wärmetauscher gemäß einem der vorherigen Ansprüche, **dadurch gekennzeichnet, dass** wenigstens ein Kasten (2, 3) mit einem gießtechnischen Verfahren hergestellt ist.

9. Verfahren zur Herstellung eines Wärmetauschers (1) gemäß einem der Ansprüche 1 bis 8 mit den Schritten:
- Montage des Rohrblocks (4);
- Verbinden der Rohre (12) mit dem Boden (10') durch Löten;
- Verbinden der Abdeckung (32) mit dem Boden (10') im Bereich der Boden-Aussparung (22) durch Löten; anschließend
- Verbinden des Kastens (2, 3) mit dem Boden (10') durch Schweißen.

## Claims

1. A heat exchanger, in particular a charge air cooler or exhaust gas cooler for an internal combustion engine of a motor vehicle, having a first box (2), a first base (10'), a second box (3) which is arranged spaced apart from this first box (2), a second base (11) and a plurality of pipes (12) by means of which the first box (2) and the second box (3) are fluidically connected, and having a chamber (6) through which a coolant can flow and which is arranged between the two boxes (2, 3) and through which a plurality or all of these pipes (12), by means of which the two boxes (2, 3) are fluidically connected, run and the bases (10', 11) are provided with one or more through openings (16) for receiving the pipes (12), wherein at least one base (10') has a border (7) which points away from the pipes (12) toward the outside and is provided with a first step (20) and a second step (21), wherein the border (7) is arranged essentially in the edge region of the base (10'), and the second step (21) is arranged in the region of the first step (20), offset toward the outside from the first step (20), wherein this at least one base (10') has a third step with an upper edge, wherein the upper edge lies in a plane with the first step (20), wherein at least one box (2, 3) or a wall section (28) of the same box (2, 3) extends into the second step (21) of this base (10'), the base (10') has, on its side facing away from the box (2, 3), at least a first profiling elevation (25), in particular a first profiling elevation (25) which runs around in the outer edge region of the base (10') and on a side of at least one base (10') which faces away from the box (2, 3), a base cut-out (22) is formed which extends from the first profiling elevation (25) of the base (10') to the interior of the base (10').

2. The heat exchanger according to claim 1, **characterised in that** the at least one base (10') forms a groove by a second step (21) between the first step (20) and the third step.

3. The heat exchanger according to claim 2, **characterised in that** the second step (21) is a circumferential or essentially circumferential groove.

4. The heat exchanger according to claim 1, 2 or 3, **characterised in that** at least one cover (32), in particular covering plate, is provided for bounding the chamber (6), and **in that** the base (10') has at least one base groove (26) on the side facing away from the box, into which base groove a wall section (39) of the cover (32) extends.

5. The heat exchanger according to claim 4, **characterised in that** the base cut-out (22) forms a gap between the cover (32) and the first profiling elevation (25) .

6. The heat exchanger according to one of the preceding claims, **characterised in that** at least one base (10') has a base protrusion (30), wherein said protrusion decreases in its extent toward the outside by virtue of a materially-connecting joining method, in particular welding, for joining a base (10') and at least one box (2, 3).

7. The heat exchanger according to one of the preceding claims, **characterised in that** the base protrusion (30) of a base (10') is between 3 mm and 10 mm, preferably 5 mm.

8. The heat exchanger according to one of the preceding claims, **characterised in that** at least one box (2, 3) is manufactured using a casting method.

9. A method for manufacturing a heat exchanger (1) according to one of claims 1 to 8, having the steps:
- mounting of the pipe block (4);
- connection of the pipes (12) to the base (10') by soldering;
- connection of the cover (32) to the base (10') in the region of the base cut-out (22) by soldering; and then
- connection of the box (2, 3) to the base (10') by welding.

## Revendications

1. Echangeur de chaleur, en particulier refroidisseur d'air de suralimentation ou refroidisseur de gaz d'échappement pour un moteur à combustion interne d'un véhicule automobile, ledit échangeur de chaleur comprenant un premier bac (2), un premier fond (10'), un deuxième bac (3) disposé en étant à distance de ce premier bac (2), comprenant un deuxième fond (11) et une multiplicité de tubes (12) au moyen desquels le premier bac (2) et le deuxième bac (3) sont reliés en communiquant fluidiquement, et comprenant une chambre (6) pouvant être traversée par un moyen de refroidissement, chambre qui est disposée entre les deux bacs (2, 3) et à travers laquelle passent plusieurs tubes ou la totalité de ces tubes (12), chambre par laquelle les deux bacs (2, 3) sont reliés en communiquant fluidiquement, et les fonds (10', 11) sont dotés d'une ou de plusieurs ouvertures de passage (16) servant au logement des tubes (12), où au moins un fond (10') présente un rebord (7) s'écartant vers l'extérieur par rapport aux tubes (12), ledit fond étant doté d'un premier étagement (20) et d'un deuxième étagement (21), où le rebord (7) est disposé pratiquement dans la zone de bordure du fond (10'), et le deuxième étagement (21) est disposé, dans la zone du premier étagement (20), en étant décalé vers l'extérieur par rapport au premier étagement (20), où ce fond (10') au moins au nombre de un présente un troisième étagement comportant un bord supérieur, où le bord supérieur se situe dans un plan formé par le premier étagement (20), où au moins un bac (2, 3) ou une partie de paroi (28) de ce même bac (2, 3) s'étend dans le deuxième étagement (21) de ce fond (10'), où le fond (10'), sur son côté placé à l'opposé du bac (2, 3), présente au moins une première élévation de profilage (25), en particulier une première élévation de profilage périphérique (25) située dans la zone de bordure extérieure du fond (10') et, sur un côté d'au moins un fond (10'), placé à l'opposé du bac (2, 3), est formé un évidement (22) se trouvant dans le fond, évidement qui s'étend depuis la première élévation de profilage (25) du fond (10') jusqu'à l'intérieur du fond (10').

2. Echangeur de chaleur selon la revendication 1, **caractérisé en ce que** ce fond (10') au moins au nombre de un forme, à travers le deuxième étagement (21), une rainure située entre le premier étagement (20) et le troisième étagement.

3. Echangeur de chaleur selon la revendication 2, **caractérisé en ce que** le deuxième étagement (21) est une rainure périphérique ou pratiquement périphérique.

4. Echangeur de chaleur selon la revendication 1, 2 ou 3, **caractérisé en ce qu'**il est prévu, pour la délimitation de la chambre (6), au moins une partie couvrante (32), en particulier une tôle de protection, et **en ce que** le fond (10') présente, sur le côté placé à l'opposé du bac, au moins une rainure (26) se trouvant dans le fond, rainure dans laquelle s'étend une partie de paroi (39) de la partie couvrante (32).

5. Echangeur de chaleur selon la revendication 4, **caractérisé en ce qu'**un intervalle est formé entre la partie couvrante (32) et la première élévation de profilage (25), par l'évidement (22) se trouvant dans le fond.

6. Echangeur de chaleur selon l'une quelconque des revendications précédentes, **caractérisé en ce qu'**au moins un fond (10') présente une partie du fond faisant saillie (30), où cette partie faisant saillie diminue dans son étendue vers l'extérieur, sous l'effet d'un procédé d'assemblage réalisé par continuité de matière, en particulier par soudage, pour l'assemblage d'un fond (10') et d'au moins un bac (2, 3).

7. Echangeur de chaleur selon l'une quelconque des revendications précédentes, **caractérisé en ce que** la partie faisant saillie (30) d'un fond (10') est comprise entre 3 mm et 10 mm, étant de préférence égale à 5 mm.

8. Echangeur de chaleur selon l'une quelconque des revendications précédentes, **caractérisé en ce qu'**au moins un bac (2, 3) est fabriqué en utilisant un procédé d'une technique de moulage.

9. Procédé de fabrication d'un échangeur de chaleur (1) selon l'une quelconque des revendications 1 à 8, ledit procédé comprenant les étapes suivantes :
- montage du bloc de tubes (4) ;
- assemblage, par brasage, des tubes (12) et du fond (10') ;
- assemblage, par brasage, de la partie couvrante (32) et du fond (10'), dans la zone de l'évidement (22) se trouvant dans le fond ; étape à laquelle fait suite
- l'assemblage, par soudage, du bac (2, 3) et du fond (10').
